# EUROPEAN PATENT SPECIFICATION

(11) **EP 4 270 602 B1**
(45) Date of publication and mention of the grant of the patent: **17.06.2026**
(21) Application number: 22878777.6
(22) Date of filing: 22.09.2022
(51) Int. Cl.: H01M 10/655, H01M 10/6553, H01M 10/653, H01M 10/647, H01M 10/613, H01M 10/48, H01M 50/502, H01M 50/211

(54) **BATTERY MODULE AND BATTERY PACK INCLUDING THE SAME**
BATTERIEMODUL UND BATTERIEPACK DAMIT
MODULE DE BATTERIE ET BLOC-BATTERIE LE COMPRENANT

(30) Priority: 06.10.2021 KR 20210132639
(43) Date of publication of application: 01.11.2023
(73) Proprietor: LG Energy Solution, Ltd., Seoul 07335 (KR)
(72) Inventor: KIM, Min Seop, Daejeon 34122 (KR); SEONG, Junyeob, Daejeon 34122 (KR)
(74) Representative: Plasseraud IP
(86) International application number: PCT/KR2022/014179
(87) International publication number: WO 2023/058956

(56) References cited:
- WO-A1-2021/182756
- CN-U- 208 013 385
- JP-A- 2014 093 243
- JP-A- 2018 060 634
- KR-A- 20140 007 063
- KR-A- 20200 032 709
- KR-A- 20210 066 528
- KR-A- 20210 092 563
- KR-B1- 101 750 479
- US-A1- 2021 262 883

## Description

### [TECHNICAL FIELD]

### Cross Citation with Related Application(s)

This application claims the benefit of Korean Patent Application No. 10-2021-0132639 filed on October 6, 2021 with the Korean Intellectual Property Office.

The present disclosure relates to a battery module and a battery pack including the same, and more particularly to a battery module that enables the diagnosis of abnormality of battery cells and a battery pack including the same.

### [BACKGROUND]

With the technology development and increased demand for mobile devices, demand for secondary batteries as energy sources has been rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

In small mobile devices, one, or two, or three battery cells are used per device, while middle or large-sized devices such as vehicles require high power and large capacity. Therefore, a middle or large-sized battery module having a plurality of battery cells electrically connected to one another is used.

Since middle or large-sized battery modules are preferably manufactured with as small a size and weight as possible, a prismatic battery, a pouch-type battery, or the like, which can be stacked with high integration and has a small weight relative to capacity, is mainly used as a battery cell of the middle or large-sized battery modules. Such a battery module has a structure in which a plurality of cell assemblies including a plurality of unit battery cells are connected in series to obtain high output. And, the battery cell includes positive and negative electrode current collectors, a separator, an active material, an electrolyte, and the like, and thus can be repeatedly charged and discharged through an electrochemical reaction between components.

Meanwhile, in recent years, amid the growing need for large-capacity structures including their utilization as an energy storage source, there is an increasing demand for battery packs having a multi-module structure formed by assembling a plurality of battery modules in which a plurality of secondary batteries are connected in series and/or in parallel.

Further, when a plurality of battery cells are connected in series or in parallel to configure a battery pack, it is common to configure a battery module composed of at least one battery cell first and then configure a battery pack by using at least one battery module and adding other components.

Generally, when the temperature of the secondary battery rises higher than an appropriate temperature, the performance of the secondary battery may be deteriorated, and in the worst case, there is also a risk of an explosion or ignition. In particular, a large number of secondary batteries, that is, a battery module or a battery pack having battery cells, can add up the heat generated from the large number of battery cells in a narrow space, so that the temperature can rise more quickly and excessively. In other words, a battery module in which a large number of battery cells are stacked, and a battery pack equipped with such a battery module can obtain high output, but it is not easy to remove heat generated from the battery cells during charging and discharging. When the heat dissipation of the battery cell is not properly performed, deterioration of the battery cells is accelerated, the lifespan is shortened, and the possibility of explosion or ignition increases.

Moreover, in the case of a middle or large-sized battery module included in a vehicle battery pack, it is frequently exposed to direct sunlight and may be placed under high-temperature conditions such as summer or desert areas.

Conventionally, heat generated from battery cells of a battery module has been released only through a unidirectional path through a thermal conductive resin layer formed on a lower part of a battery cell stack and a bottom part of a module frame. However, in recent years, the need for high capacity, high energy, rapid charging and the like has continuously increased, the amount of current flowing through the busbar has increased, and heat generated in bus bars, battery cells, and electrode leads have also tended to increase. Such heat generation is hard to effectively cool only with a conventional cooling structure. In addition, in the case of gas pockets in the battery cells, which are more likely to occur as the charging and discharging of the battery cells progress due to rapid charging, it is difficult to accurately detect whether or not it has occurred.

Therefore, there is a need for a new structure that can solve the problem of bus bar heat generation that occurs according to the needs such as high capacity, high energy and rapid charging, grasp the occurrence of gas pockets in the situation of rapid charging, and enable the diagnosis of abnormality of battery cells.

Further prior art is disclosed in WO 2021/182756 A1, JP 2014 093243 A, and US 2021/262883 A1.

### [DETAILED DESCRIPTION OF THE INVENTION]

### [Technical Problem]

It is an object of the present disclosure to provide a battery module that can solve the heat generation problem in battery cells and bus bars and enable the diagnosis of abnormality of battery cells, and a battery pack including the same.

However, the objects of the present disclosure are not limited to the aforementioned objects, and other objects which are not mentioned herein should be clearly understood by those skilled in the art from the following detailed description and the accompanying drawings.

### [Technical Solution]

According to one embodiment of the present disclosure, there is provided a battery module comprising: a battery cell stack in which a plurality of battery cells are stacked, a module frame that surrounds the battery cell stack, end plates for covering the front and rear surfaces of the battery cell stack that are opened in the module frame, a heat transfer member formed between the battery cell stack and the end plate, and a movement sensing unit that senses movement of the heat transfer member, wherein the module frame includes a frame member for covering the bottom part and both side surfaces of the battery cell stack, and an upper plate for covering the upper part of the battery cell stack, and the movement sensing unit includes a hole formed in the upper plate.

The heat transfer member is formed of a material having fluidity, and the heat transfer member may be movable when a gas pocket occurs inside the battery module.

The heat transfer member may be formed in a gel form.

The movement sensing unit includes a pressure sensor, and the pressure sensor may be formed so as to come into contact with the heat transfer member.

When a gas pocket occurs inside the battery module, the heat transfer member may flow to the outside through the hole of the upper plate.

The battery module according to another embodiment of the present disclosure may further comprise a protruding member formed so as to come into contact with the heat transfer member and to be adjacent to the hole, wherein when a gas pocket occurs inside the battery module, the protruding member may move toward the outside of the upper plate.

The battery module according to another embodiment of the present disclosure may further comprise a groove part that is formed inside the upper plate, wherein the protruding member may be fitted into the groove part.

The battery module further comprises a bus bar frame that is formed between the front and rear surfaces of the battery cell stack and the end plate, wherein the heat transfer member may be formed in a space between the battery cell stack and the bus bar frame and a space between the bus bar frame and the end plate.

The heat transfer member may entirely fill a space between the battery cell stack and the bus bar frame and a space between the bus bar frame and the end plate.

The battery module further comprises an electrode lead that is protruded from the battery cell stack, wherein the heat transfer member may be in contact with the electrode lead.

The battery module comprises a plurality of bus bars mounted on the bus bar frame, wherein the heat transfer member may come into contact with the bus bar and the bus bar frame.

The heat transfer member may come into contact with a bottom part of the module frame and an upper part of the module frame.

According to yet another embodiment of the present disclosure, there is provided a battery pack comprising the above-mentioned battery module.

### [Advantageous Effects]

A battery module according to one embodiment of the present disclosure includes a heat transfer member, thereby capable of solving the heat generation problem in battery cells and bus bars under high current and rapid charging environments. Also, as the heat generation problem is solved, the stability of the battery module can also be improved.

Moreover, the heat transfer member fills a space between the battery cell stack and the bus bar frame and a space between the bus bar frame and the end plate, thereby capable of achieving an effect of improving the insulation performance of the battery module.

In addition, by sensing the movement and change of the heat transfer member due to the occurrence of gas pockets in the battery module, it is possible to diagnose the occurrence of gas pockets in battery cells and the abnormality of battery cells.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is an exploded perspective view of a battery module of the present disclosure;
Fig. 2 is a perspective view which shows a battery module in which components of Fig. 1 are assembled;
Fig. 3 is a diagram which enlarges and shows a state cut along the section P1 of Fig. 2;
Fig. 4 is a diagram which enlarges and shows a state cut along the section P2 of Fig. 2;
Fig. 5 is a diagram which shows a movement sensing unit of a battery module according to one embodiment of the present disclosure;
Fig. 6 is a diagram which shows a movement sensing unit of a battery module according to another embodiment of the present disclosure;
Fig. 7 is a diagram which enlarges and shows the section A of Fig. 6;
Fig. 8 is a diagram which shows a movement sensing unit of a battery module according to another embodiment of the present disclosure;
Fig. 9 is a diagram which enlarges and shows the section B of Fig. 8;
Fig. 10 is a diagram which shows a movement sensing unit of a battery module according to another embodiment of the present disclosure; and
Fig. 11 is a perspective view which shows a battery cell included in the battery module of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

The terms "first," "second," etc. are used herein to explain various components, but the components should not be limited by the terms. These terms are only used to distinguish one component from another component.

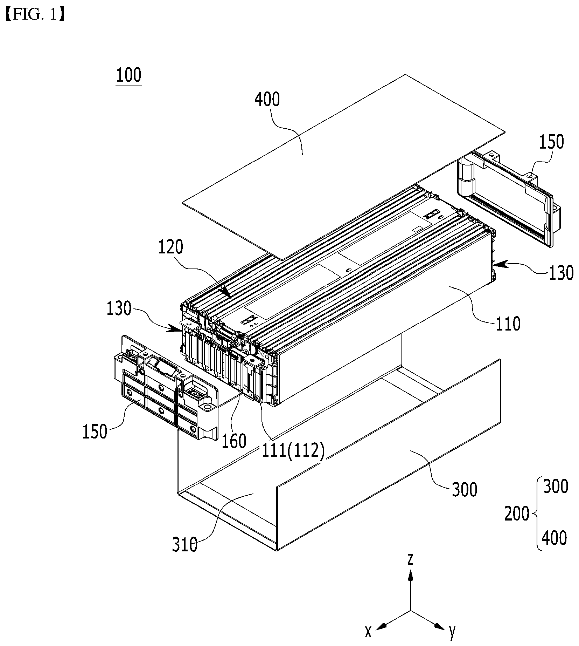

Hereinafter, a battery module of the present disclosure will be described with reference to Figs. 1 to 4 and Fig. 11.

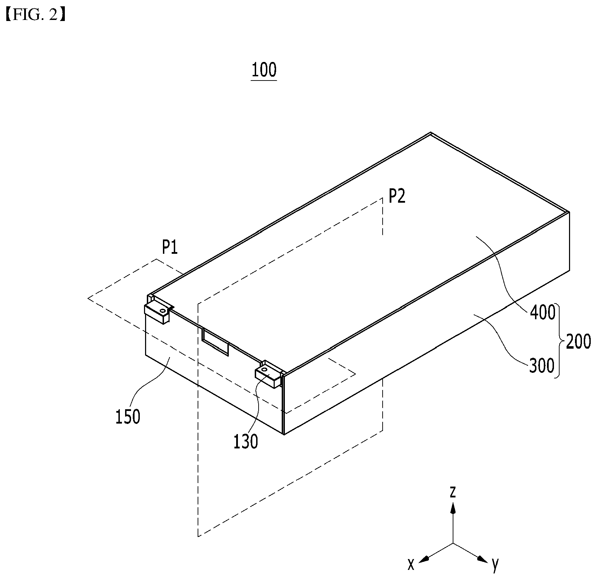

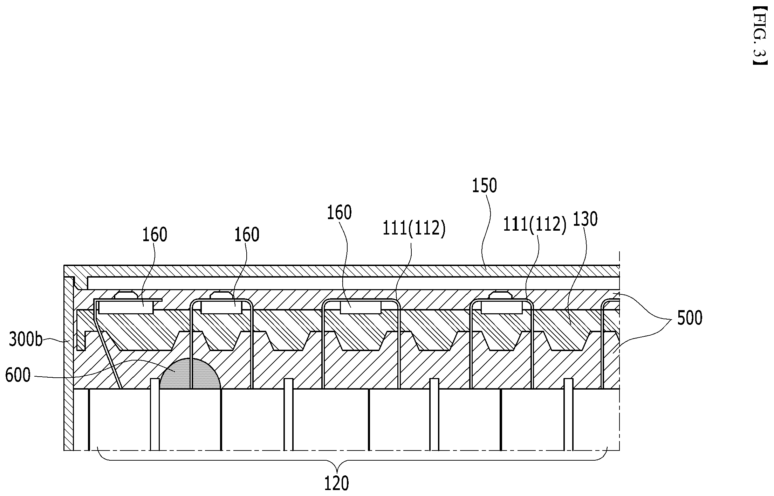

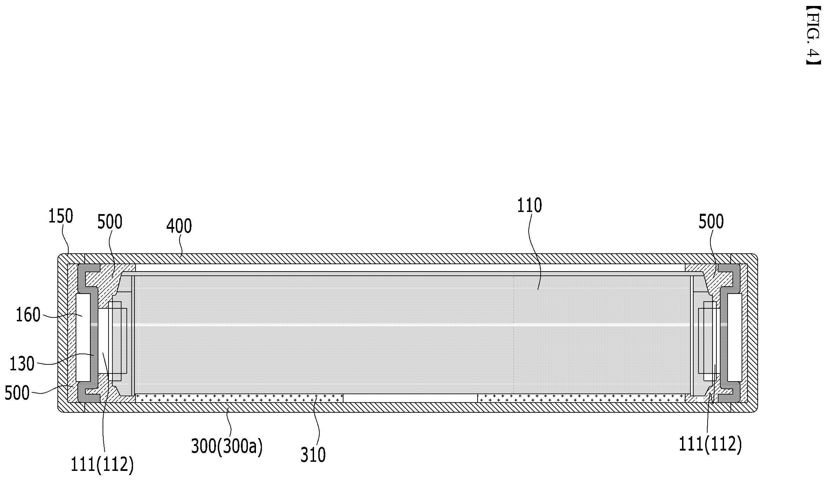

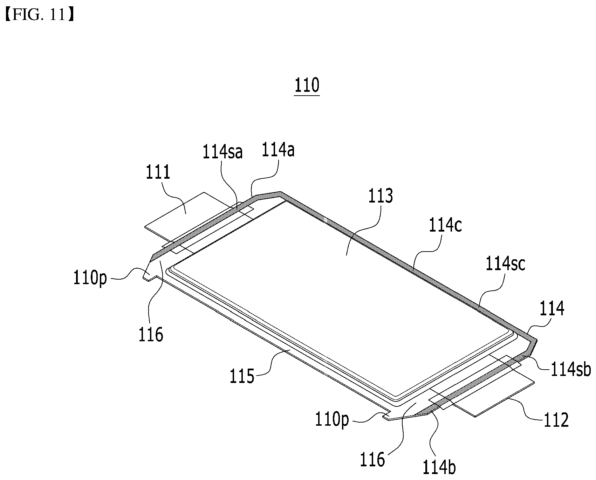

Fig. 1 is an exploded perspective view of a battery module of the present disclosure. Fig. 2 is a perspective view which shows a battery module in which components of Fig. 1 are assembled. Fig. 3 is a diagram which enlarges and shows a state cut along the section P1 of Fig. 2. Fig. 4 is a diagram which enlarges and shows a state cut along the section P2 of Fig. 2. Fig. 11 is a perspective view which shows a battery cell included in the battery module of the present disclosure.

Referring to Figs. 1 and 2, a battery module 100 according to the present embodiment includes a battery cell stack 120 in which a plurality of battery cells 110 are stacked, and a module frame 200 that surrounds the battery cell stack 120.

First, the battery cell 110 is preferably a pouch-type battery cell, and can be formed in a rectangular sheet-like structure. For example, referring to Fig. 11, the battery cell 110 according to the present embodiment has a structure in which two electrode leads 111 and 112 face each other and protrude from one end part 114a and the other end part 114b of the cell main body 113, respectively. That is, the battery cell 110 includes electrode leads 111 and 112 that are protruded in mutually opposite directions. More specifically, the electrode leads 111 and 112 are connected to an electrode assembly (not shown), and are protruded from the electrode assembly (not shown) to the outside of the battery cell 110.

Meanwhile, the battery cell 110 can be produced by joining both end parts 114a and 114b of a cell case 114 and one side part 114c connecting them in a state in which an electrode assembly (not shown) is housed in a cell case 114. In other words, the battery cell 110 according to the present embodiment has a total of three sealing parts 114sa, 114sb and 114sc, wherein the sealing parts 114sa, 114sb and 114sc have a structure that is sealed by a method such as heat-sealing, and the remaining other side part may be composed of a connection part 115. The cell case 114 may be composed of a laminated sheet including a resin layer and a metal layer.

Additionally, the connection part 115 may extend along one edge of the battery cell 110, and a bat-ear 110p may be formed at an end of the connection part 115. Further, while the cell case 114 is sealed with the protruding electrode leads 111 and 112 being interposed therebetween, a terrace part 116 may be formed between the electrode leads 111 and 112 and the cell main body 113. That is, the battery cell 110 may include a terrace part 116 formed to extend from the cell case 114 in the direction in which the electrode leads 111 and 112 protrude.

Such a battery cell 110 may be composed by a plurality of numbers, and the plurality of battery cells 110 may be stacked so as to be electrically connected to each other, thereby forming a battery cell stack 120. Particularly, as shown in Fig. 1, a plurality of battery cells 110 may be stacked along the direction parallel to the y-axis. Thereby, the electrode leads 111 and 112 may protrude in the x-axis direction and the -x-axis direction, respectively.

Meanwhile, when charge and discharge of the battery cells 110 are repeatedly performed, heat is generated. Even among them, a great amount of heat generates in a portion adjacent to the electrode leads 111 and 112. That is, as it approaches to the terrace part 116 rather than the central part of the cell main body 113, more heat is generated due to the charge and discharge, so that a structure for cooling the corresponding part may be required.

Meanwhile, the module frame 200 may include a frame member 300 which is opened in the upper surface, the front surface and the rear surface thereof and covers the lower part and both side parts of the battery cell stack 120, and an upper plate 400 that covers an upper part of the battery cell stack 120. However, the module frame 200 is not limited thereto, and can be replaced with a frame having another shape such as an L-shaped frame or a mono-frame that surrounds the battery cell stack 120 except the front and rear surfaces thereof. The battery cell stack 120 housed inside the module frame 200 can be physically protected through the module frame 200. At this time, the frame member 300 may include a bottom part 300a supporting the lower part of the battery cell stack 120, and side surface parts 300b each extending upward from both ends of the bottom part 300a.

The upper plate 400 may cover the opened upper side surface of the module frame 200. The end plate 150 can cover the front and rear surfaces of the battery cell stack 120 that are opened in the module frame 200. The end plate 150 can be weld-coupled with the front and rear end edges of the upper plate 400 and the front and rear end edges of the module frame 200.

A bus bar frame 130 can be formed between the end plate 150 and the front and rear surfaces of the battery cell stack 120. The plurality of bus bars 160 mounted on the bus bar frame 130 are formed so as to protrude from the battery cells 110, and can come into contact with the electrode leads 111 and 112 mounted on the bus bar frame 130.

Moreover, the battery module 100 according to the present embodiment further includes a thermal conductive resin layer 310 located between the lower surface of the battery cell stack 120 and the bottom part of the module frame 200, that is, the bottom part 300a of the frame member 300, wherein the thermal conductive resin layer 310 can play a role of transferring heat generated from the battery cell 110 to the bottom of the battery module 100 and fixing the battery cell stack 120.

A conventional battery module is configured such that heat generated in the battery cells is discharged through the thermal conductive resin layer formed at a lower part of the battery cell. However, the thermal conductive resin layer had a problem that it cannot efficiently cool the electrode leads and bus bar frames on the front surface and the rear surface of the battery cells and bus bars mounted on the bus bar frames. In addition, the conventional battery module had a problem that a space between the battery cell stack and the bus bar frame and a space between the bus bar frame and the end plate are formed as empty spaces, and thus, insulation performance deteriorates due to inflow of moisture or foreign matter. Therefore, in a situation where the electrode leads and bus bars of the battery cell are made to generate high heat in a short period of time by the flow of high current, such as rapid charging, a structure capable of effectively cooling the heat generation is required.

Moreover, the conventional battery module had a problem that due to the gas generated through the decomposition or side reaction of the electrolyte in the battery cell, when a gas pocket occurs in which the inner area of the sealing part, such as the cell body of the battery cell and the terrace part, protrudes and swells, it is not possible to detect definitively whether a gas pocket has occurred. Particularly, a portion of a battery cell adjacent to an electrode lead and a sealing part swells due to the gas pocket, which increases the risk of damage to the battery cell. Therefore, when the gas pocket occurs, it contains a material that flows due to the occurrence of the gas pocket, and a structure capable of sensing the occurrence of gas pockets by detecting the flow and movement of the material is needed. In addition, by sensing the gas pocket, it may be possible to diagnose the occurrence of abnormality in battery cells.

Therefore, the battery module 100 according to the present embodiment includes a heat transfer member 500 formed between the battery cell stack 120 and the end plate 150, and further includes a movement sensing units 400H, 700 and 800 for sensing the movement of the heat transfer member 500.

Specifically, referring to Figs. 3 and 4, the heat transfer member 500 may be formed in a space between the battery cell stack 120 and the bus bar frame 130 and a space between the bus bar frame 130 and the end plate 150. In addition, an insulating cover may be further formed in the space between the bus bar frame 130 and the end plate 150, so that the heat transfer member 500 can fill the space between the bus bar frame 130 and the insulating cover.

In particular, the heat transfer member 500 may entirely fill the above-mentioned spaces. That is, the heat transfer member 500 may entirely fill the space between the battery cell stack 120 and the bus bar frame 130 and the space between the bus bar frame 130 and the end plate 150. Therefore, through the heat transfer member 500 that has entirely filled, the insulation performance is improved, and the possibility of penetration of moisture and foreign matter is minimized, thereby improving the stability of the battery module. When moisture or foreign matter penetrates from the outside, a short circuit may occur in the bus bar 160 and the life of the battery module 100 may be shortened. Therefore, the heat transfer member 500 prevents moisture and foreign matter from penetrating into the battery module and contacting the bus bar 160 and the electrode leads 111 and 112, thereby capable of securing the performance of the battery module and improving the stability.

Therefore, as described above, the heat transfer member 500 according to the present embodiment may come into contact with the electrode leads 111 and 112. The electrode leads 111 and 112, which are portions where a large amount of heat is generated in battery cell 110, are portions requiring the most cooling among portions of the battery cell 110. However, there is no structure that comes into direct contact with the electrode leads 111 and 112 to form a cooling path, which poses a problem. Thus, in the case of the battery module 100 according to the present embodiment, effective cooling of the electrode leads 111 and 112 is possible by the heat transfer member 500. In particular, the heat transfer member 500 may come into surface contact with the electrode leads 111 and 112, and as the contact area increases, effective cooling may be enabled even if a large amount of heat generates by the contact.

Further, the heat transfer member 500 may also come into contact with the bus bar 160 and the bus bar frame 130. Heat generated from the bus bar 160 can be cooled through the heat transfer member 500 and can be quickly transferred through other components in contact with the heat transfer member 500. Further, the heat transfer member 500 comes into contact with each of the plurality of bus bars 160 formed in the battery module 100, thereby capable of preventing physical contact between the bus bars 160. Therefore, it is possible to interrupt a short circuit or the like that may occur due to contact between the bus bars 160.

Moreover, the heat transfer member 500 may come into contact with the bottom part of the module frame 200 and the upper part of the module frame 200. That is, the heat transfer member 500 may come into contact with the bottom part 300a of the frame member 300 and the upper plate 400. Specifically, referring to Fig. 4, the heat transfer member 500 may be formed so as to come into contact with the bottom part 300a of the frame member 300 and the thermal conductive resin layer 310. Further, the heat transfer member 500 may be formed so as to come into contact with the upper plate 400. Therefore, the heat transfer member 500 comes into contact with the bottom part 300a of the frame member 300, the thermal conductive resin layer 310 and the upper plate 400 to form an additional heat transfer path, which makes it possible to transfer and dissipate heat to the outside of the module. At this time, the heat transfer member 500 may come into surface contact with the configurations described above. Since the heat transfer member 500 is formed in the form of filling a space, it is possible to achieve improved cooling efficiency by coming into surface contact with the above components.

As explained above, the heat transfer member 500 according to the present embodiment may be formed so as to come into contact with a plurality of components. In particular, the heat transfer member 500 comes into direct contact with the bus bar 160 and the electrode leads 111 and 112, and heat generated from the bus bar 160 and the electrode leads 111 and 112 is immediately transferred through multiple components, thereby improving the temperature deviation between components in the battery module, especially the parts of the battery cells.

At this time, the heat transfer member 500 may be formed of a material having fluidity. The heat transfer member 500 may include a heat transfer material that is injected and cured, but may include a gel form that is not completely cured. That is, the heat transfer member 500 may be formed in a gel form. As the heat transfer member 500 is formed in a gel form, it is possible to secure the cooling performance and at the same time, have fluidity, and thus cope with changes in some components in the battery module. Therefore, the heat transfer member 500 can move in a situation, such as during the occurrence of a gas pocket 600 in the battery module, thereby capable of securing continuous cooling performance.

Moreover, the heat transfer member 500 may be formed of a material having thermal conductivity and may be formed of a material having insulation properties. Therefore, by forming the heat transfer member 500, it is possible to achieve the effect of improving the cooling performance and insulation performance through heat transfer.

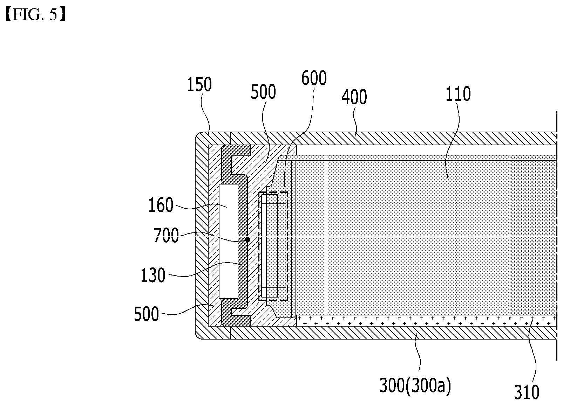

Next, the movement sensing unit of the present disclosure will be described in detail with reference to Figs. 5 to 10.

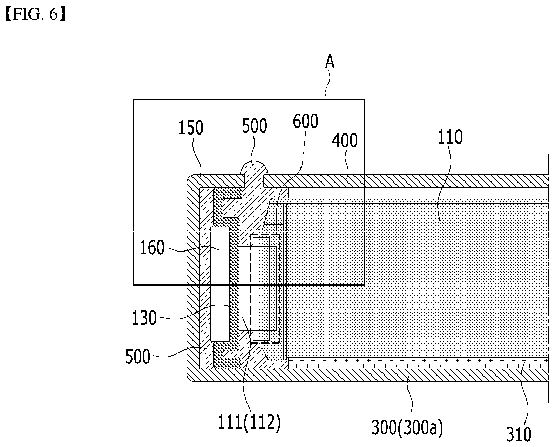

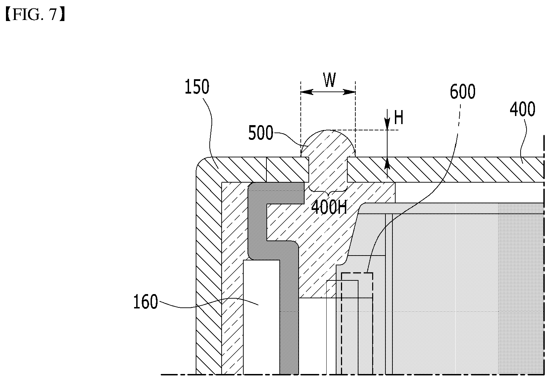

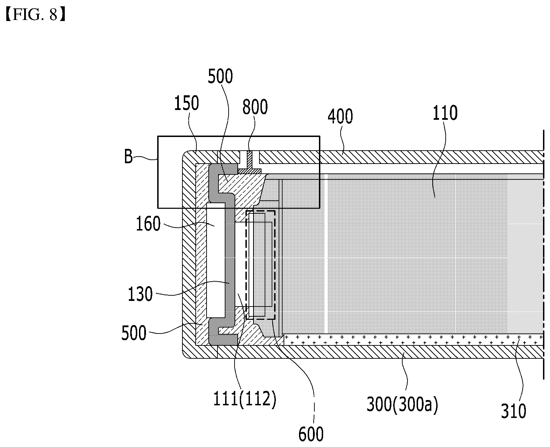

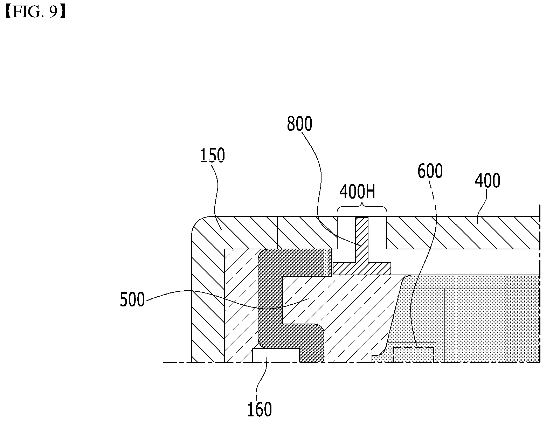

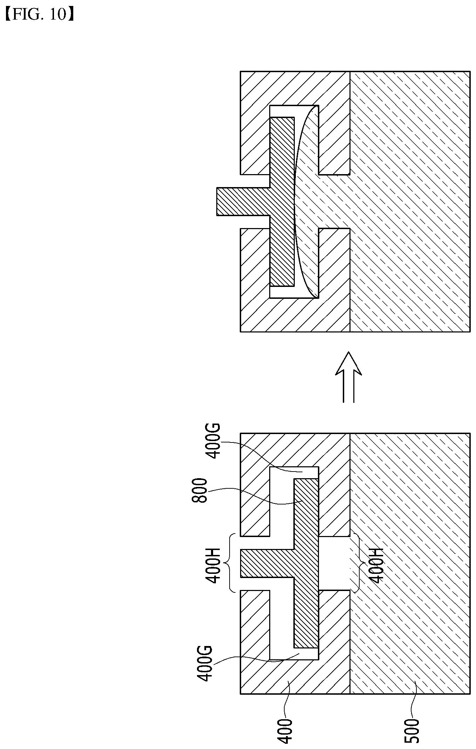

Fig. 5 is a diagram which shows a movement sensing unit of a battery module according to one embodiment of the present disclosure. Fig. 6 is a diagram which shows a movement sensing unit of a battery module according to another embodiment of the present disclosure. Fig. 7 is a diagram which enlarges and shows the section A of Fig. 6. Fig. 8 is a diagram which shows a movement sensing unit of a battery module according to another embodiment of the present disclosure. Fig. 9 is a diagram which enlarges and shows the section B of Fig. 8. Fig. 10 is a diagram which shows a movement sensing unit of a battery module according to another embodiment of the present disclosure.

Referring to Fig. 5, the movement sensing units 400H, 700 and 800 of the battery module according to one embodiment of the present disclosure include a pressure sensor 700, wherein the pressure sensor 700 may be formed so as to come into contact with the heat transfer member 500. The pressure sensor 700 may be formed anywhere in the battery module within a range coming into contact with the heat transfer member 500. In one example, referring to Fig. 5, the heat transfer member 500 can be compressed by the movement of the heat transfer member 500 to easily sense a pressure change, and the pressure sensor 700 can be formed on the bus bar frame 130 so as to ensure stable installation of the pressure sensor 700.

When the gas pocket 600 occurs, the heat transfer member 500 in contact with the battery cell 110 moves through the electrode leads 111 and 112 and the like, thereby increasing the internal pressure. Specifically, as the gas pocket 600 occurs, the space in which the heat transfer member 500 can exist becomes narrower, and a pressure change can be created as the heat transfer member 500 moves in the area where the gas pocket 600 occurs. Therefore, the pressure sensor 700 may sense the pressure change, and thus sense the occurrence of the gas pocket 600 in the battery cell 110 and the occurrence of abnormality in the battery cell 110 due to gas generation.

Referring to Figs. 6 and 7, the movement sensing units 400H, 700 and 800 of the battery module according to another embodiment of the present disclosure may include a hole 400H formed in the upper plate 400. When a gas pocket occurs, the heat transfer member 500 may flow to the outside through the hole 400H of the upper plate 400. The hole 400H may be formed so as to pass through the upper plate 400. Therefore, as the heat transfer member 500 is pushed out by the gas pocket 600, it may flow to the outside along the hole 400H formed in the upper plate 400.

At this time, by measuring the height (H) and width (W) of the heat transfer member 500 flowing out to the outside through the hole 400H, it is possible to predict the occurrence of the gas pocket 600 and the degree of occurrence thereof. In addition, since the occurrence of the gas pocket 600 is related to the performance of the battery cell 110, it is possible to confirm the deterioration of the life of the battery cell 110 and diagnose the occurrence of an abnormality thereof by confirming the presence or absence of the gas pocket 600, and confirming the presence or absence of gas generation in the battery cell 110 accompanied therewith.

Referring to Figs. 8 and 9, the movement sensing units 400H, 700 and 800 of the battery module according to another embodiment of the present disclosure may further comprise a protruding member 800 that is formed so as to come into contact with the heat transfer member 500 and to be adjacent to the hole 400H. At this time, when the gas pocket 600 occurs, the protruding member 800 may move toward the outside of the upper plate 400.

Specifically, the protruding member 800 may be formed in a shape including a horizontal surface formed horizontally with the upper plate 400 and a vertical surface extending vertically from the horizontal surface. Further, the protruding member 800 may be formed between the upper part of the heat transfer member 500 and the inner surface of the upper plate 400. Therefore, the horizontal surface of the protruding member 800 may be fixed to the inner surface of the upper plate 400, and may be shaped such that the vertical surface passes through the hole 400H.

At this time, when the gas pocket 600 occurs, the protruding member 800 is pushed upward due to the movement of the heat transfer member 500. As the protruding member 800 moves upward, the vertical surface formed so as to pass through the hole 400H moves toward the outside of the upper plate 400, so that the vertical surface can be confirmed with the naked eye even from the outside. Therefore, it is possible to predict the presence or absence of occurrence of the gas pocket 600 and the degree of occurrence thereof by confirming the extent to which the vertical surface protrudes to the outside.

Referring to Fig. 10, the battery module according to another embodiment of the present disclosure further includes a groove part 400G formed inside the upper plate 400, and the protruding member 800 may be fitted into the groove part 400G.

Specifically, a groove part 400G that is recessed and formed from the hole 400H may be formed in the space between the outside surface and the inside surface of the upper plate 400. The groove part 400G may be formed on both side surfaces of the hole 400H. At this time, the horizontal surface of the protruding member 800 may be fitted into the groove part 400G. At this time, even if the protruding member 800 is fitted, an extra space may be formed between the groove part 400G and the horizontal surface. Therefore, when the gas pocket occurs, the protruding member 800 is raised due to the heat transfer member 500 flowing in through the hole 400H, so that the vertical surface of the protruding member 800 can protrude to the outside through the hole 400H. Therefore, it may be possible to predict the presence or absence of occurrence of the gas pocket and the degree of occurrence thereof by confirming the extent to which the vertical surface protrudes to the outside.

As described above, due to the movement sensing units 400H, 700 and 800 that sense the movement of the heat transfer member 500 according to embodiments of the present disclosure, movement of the heat transfer member 500 during the occurrence of the gas pocket can be confirmed with a sensor and naked eyes. Therefore, the occurrence of an abnormality in the battery cell 110 can be predicted by sensing the presence or absence of occurrence of the gas pocket and the degree of occurrence thereof, thereby appropriately coping with the deterioration of the life and the occurrence of abnormality of the battery cell.

In particular, when the gas pocket increases, the possibility of damaging the sealing parts 114sa, 114sb and 114sc of the battery cell 110 increases. Further, when the electrolyte leaks due to damage to the sealing parts 114sa, 114sb and 114sc, the possibility of fire outbreak increases. Therefore, the safety of the battery cell 110 and the battery module 100 can be ensured by sensing the occurrence of the gas pocket by the heat transfer member 500 and the movement sensing units 400H, 700 and 800 that sense the movement of the heat transfer member 500 according to the embodiments of the present disclosure.

A battery pack according to another embodiment of the present disclosure will be described below.

A battery pack according to the present embodiment includes the battery module described above. In addition, the battery pack of the present disclosure may have a structure in which one or more of the battery modules according to the present embodiment are gathered, and packed together with a battery management system (BMS) and a cooling device that control and manage battery's temperature, voltage, etc.

The battery pack can be applied to various devices. Such a device can be applied to a vehicle means such as an electric bicycle, an electric vehicle, or a hybrid vehicle, but the present disclosure is not limited thereto, and is applicable to various devices that can use a battery module, which is also falls under the scope of the present disclosure.

Although preferred embodiments of the present disclosure have been described in detail above, the scope of the present disclosure is not limited thereto, and numerous modifications can be carried out by those skilled in the art, without departing from the principles of the invention described in the appended claims.

### [Description of Reference Numerals]

100: battery module
110: battery cell
120: battery cell stack
130: bus bar frame
150: end plate
160: bus bar
200: module frame
300: frame member
400: upper plate
500: heat transfer member
600: gas pocket
700: pressure sensor
800: protruding member

## Claims

1. A battery module (100) comprising:
a battery cell stack (120) in which a plurality of battery cells (110) are stacked,
a module frame (200) that surrounds the battery cell stack (120),
end plates (150) for covering the front and rear surfaces of the battery cell stack (120) that are opened in the module frame,
a heat transfer member (500) formed between the battery cell stack (120) and the end plate (150), and
a movement sensing unit (400H, 700, 800) that senses movement of the heat transfer member (500),
wherein the module frame (200) includes a frame member (300) for covering the bottom part (300a) and both side surfaces (300b) of the battery cell stack (120), and an upper plate (400) for covering the upper part of the battery cell stack (120), the battery module being **characterised in that**
the movement sensing unit (400H, 700, 800) includes a hole (400H) formed in the upper plate (400).

2. The battery module (100) according to claim 1, wherein:
the heat transfer member (500) is formed of a material having fluidity, and
the heat transfer member (500) is movable when a gas pocket (600) occurs inside the battery module (100).

3. The battery module (100) according to claim 2, wherein:
the heat transfer member (500) is formed in a gel form.

4. The battery module (100) according to claim 1, wherein:
the movement sensing unit (400H, 700, 800) includes a pressure sensor (700), and
the pressure sensor (700) is formed so as to come into contact with the heat transfer member (500).

5. The battery module (100) according to claim 1, wherein:
when a gas pocket (600) occurs inside the battery module (100), the heat transfer member (500) flows to the outside through the hole (400H) of the upper plate (400).

6. The battery module (100) according to claim 1, further comprising:
a protruding member (800) formed so as to come into contact with the heat transfer member (500) and to be adjacent to the hole (400H),
wherein when a gas pocket (600) occurs inside the battery module (100), the protruding member (800) moves toward the outside of the upper plate (400).

7. The battery module (100) according to claim 6, further comprising:
a groove part (400G) that is formed inside the upper plate (400),
wherein the protruding member (800) is fitted into the groove part (400G).

8. The battery module (100) according to claim 1, further comprising:
a bus bar frame (130) that is formed between the front and rear surfaces of the battery cell stack (120) and the end plate (150),
wherein the heat transfer member (500) is formed in a space between the battery cell stack (120) and the bus bar frame (130) and a space between the bus bar frame (130) and the end plate (150).

9. The battery module (100) according to claim 8, wherein:
the heat transfer member (500) entirely fills a space between the battery cell stack (120) and the bus bar frame (130) and a space between the bus bar frame (130) and the end plate (150).

10. The battery module (100) according to claim 8, further comprising:
an electrode lead (111, 112) that protrudes from the battery cell stack (120),
wherein the heat transfer member (500) is in contact with the electrode lead (111, 112).

11. The battery module (100) according to claim 8, comprising:
a plurality of bus bars (160) mounted on the bus bar frame (130),
wherein the heat transfer member (500) comes into contact with the bus bar (160) and the bus bar frame (130).

12. The battery module (100) according to claim 1, wherein:
the heat transfer member (500) comes into contact with a bottom part of the module frame (200) and an upper part of the module frame (200).

13. A battery pack comprising the battery module (100) as set forth in claim 1.

## Patentansprüche

1. Batteriemodul (100), umfassend:
einen Batteriezellenstapel (120), in dem eine Vielzahl von Batteriezellen (110) gestapelt sind,
einen Modulrahmen (200), der den Batteriezellenstapel (120) umgibt,
Endplatten (150) zum Abdecken der vorderen und der hinteren Fläche des Batteriezellenstapels (120), die im Modulrahmen offen sind,
ein Wärmeübertragungselement (500), das zwischen dem Batteriezellenstapel (120) und der Endplatte (150) ausgebildet ist, und
eine Bewegungserfassungseinheit (400H, 700, 800), die eine Bewegung des Wärmeübertragungselements (500) erfasst,
wobei der Modulrahmen (200) ein Rahmenelement (300) zum Abdecken des unteren Teils (300a) und beider Seitenflächen (300b) des Batteriezellenstapels (120) und eine obere Platte (400) zum Abdecken des oberen Teils des Batteriezellenstapels (120) aufweist,
wobei das Batteriemodul **dadurch gekennzeichnet ist, dass**
die Bewegungserfassungseinheit (400H, 700, 800) ein in der oberen Platte (400) ausgebildetes Loch (400H) aufweist.

2. Batteriemodul (100) nach Anspruch 1, wobei:
das Wärmeübertragungselement (500) aus einem fließfähigen Material gebildet ist, und
das Wärmeübertragungselement (500) beweglich ist, wenn eine Gasblase (600) im Inneren des Batteriemoduls (100) auftritt.

3. Batteriemodul (100) nach Anspruch 2, wobei:
das Wärmeübertragungselement (500) in Gelform ausgebildet ist.

4. Batteriemodul (100) nach Anspruch 1, wobei:
die Bewegungserfassungseinheit (400H, 700, 800) einen Drucksensor (700) aufweist, und
der Drucksensor (700) so ausgebildet ist, dass er in Kontakt mit dem Wärmeübertragungselement (500) kommt.

5. Batteriemodul (100) nach Anspruch 1, wobei:
wenn eine Gasblase (600) im Inneren des Batteriemoduls (100) auftritt, das Wärmeübertragungselement (500) durch das Loch (400H) der oberen Platte (400) nach außen fließt.

6. Batteriemodul (100) nach Anspruch 1, ferner umfassend:
ein vorstehendes Element (800), das so ausgebildet ist, dass es in Kontakt mit dem Wärmeübertragungselement (500) kommt und an das Loch (400H) angrenzt,
wobei, wenn eine Gasblase (600) im Inneren des Batteriemoduls (100) auftritt, sich das vorstehende Element (800) zur Außenseite der oberen Platte (400) bewegt.

7. Batteriemodul (100) nach Anspruch 6, ferner umfassend:
einen Nutabschnitt (400G), der innerhalb der oberen Platte (400) ausgebildet ist,
wobei das vorstehende Element (800) in den Nutabschnitt (400G) eingepasst ist.

8. Batteriemodul (100) nach Anspruch 1, ferner umfassend:
einen Sammelschienenrahmen (130), der zwischen der vorderen und der hinteren Fläche des Batteriezellenstapels (120) und der Endplatte (150) ausgebildet ist,
wobei das Wärmeübertragungselement (500) in einem Raum zwischen dem Batteriezellenstapel (120) und dem Sammelschienenrahmen (130) und einem Raum zwischen dem Sammelschienenrahmen (130) und der Endplatte (150) ausgebildet ist.

9. Batteriemodul (100) nach Anspruch 8, wobei:
das Wärmeübertragungselement (500) einen Raum zwischen dem Batteriezellenstapel (120) und dem Sammelschienenrahmen (130) und einen Raum zwischen dem Sammelschienenrahmen (130) und der Endplatte (150) vollständig ausfüllt.

10. Batteriemodul (100) nach Anspruch 8, ferner umfassend:
eine Elektrodenleitung (111, 112), die aus dem Batteriezellenstapel (120) herausragt,
wobei das Wärmeübertragungselement (500) in Kontakt mit der Elektrodenleitung (111, 112) ist.

11. Batteriemodul (100) nach Anspruch 8, umfassend:
eine Vielzahl von Sammelschienen (160), die auf dem Sammelschienenrahmen (130) montiert sind,
wobei das Wärmeübertragungselement (500) in Kontakt mit der Sammelschiene (160) und dem Sammelschienenrahmen (130) kommt.

12. Batteriemodul (100) nach Anspruch 1, wobei:
das Wärmeübertragungselement (500) in Kontakt mit einem unteren Teil des Modulrahmens (200) und einem oberen Teil des Modulrahmens (200) kommt.

13. Batteriepack, umfassend das Batteriemodul (100) wie in Anspruch 1 dargelegt.

## Revendications

1. Module de batterie (100) comprenant :
un empilement de cellules de batterie (120) dans lequel une pluralité de cellules de batterie (110) sont empilées,
un châssis de module (200) qui entoure l'empilement de cellules de batterie (120),
des plaques d'extrémité (150) pour couvrir les surfaces avant et arrière de l'empilement de cellules de batterie (120) qui sont ouvertes dans le châssis de module,
un élément de transfert de chaleur (500) formé entre l'empilement de cellules de batterie (120) et la plaque d'extrémité (150), et
une unité de détection de mouvement (400H, 700, 800) qui détecte le mouvement de l'élément de transfert de chaleur (500),
dans lequel le châssis de module (200) inclut un élément de châssis (300) pour couvrir la partie inférieure (300a) et les deux surfaces latérales (300b) de l'empilement de cellules de batterie (120), et une plaque supérieure (400) pour couvrir la partie supérieure de l'empilement de cellules de batterie (120),
le module de batterie étant **caractérisé en ce que**
l'unité de détection de mouvement (400H, 700, 800) inclut un trou (400H) formé dans la plaque supérieure (400).

2. Le module de batterie (100) selon la revendication 1, dans lequel:
l'élément de transfert de chaleur (500) est formé d'un matériau ayant une fluidité, et
l'élément de transfert de chaleur (500) est mobile lorsqu'une poche de gaz (600) se produit à l'intérieur du module de batterie (100).

3. Le module de batterie (100) selon la revendication 2, dans lequel:
l'élément de transfert de chaleur (500) est formé sous une forme de gel.

4. Le module de batterie (100) selon la revendication 1, dans lequel :
l'unité de détection de mouvement (400H, 700, 800) inclut un capteur de pression (700), et
le capteur de pression (700) est formé de manière à venir en contact avec l'élément de transfert de chaleur (500).

5. Le module de batterie (100) selon la revendication 1, dans lequel:
lorsqu'une poche de gaz (600) se produit à l'intérieur du module de batterie (100), l'élément de transfert de chaleur (500) s'écoule vers l'extérieur à travers le trou (400H) de la plaque supérieure (400).

6. Le module de batterie (100) selon la revendication 1, comprenant en outre :
un élément en saillie (800) formé de manière à venir en contact avec l'élément de transfert de chaleur (500) et à être adjacent au trou (400H),
dans lequel, lorsqu'une poche de gaz (600) se produit à l'intérieur du module de batterie (100), l'élément en saillie (800) se déplace vers l'extérieur de la plaque supérieure (400).

7. Le module de batterie (100) selon la revendication 6, comprenant en outre :
une partie de rainure (400G) qui est formée à l'intérieur de la plaque supérieure (400),
dans lequel l'élément en saillie (800) est monté dans la partie de rainure (400G).

8. Le module de batterie (100) selon la revendication 1, comprenant en outre :
un châssis de barre omnibus (130) qui est formé entre les surfaces avant et arrière de l'empilement de cellules de batterie (120) et la plaque d'extrémité (150),
dans lequel l'élément de transfert de chaleur (500) est formé dans un espace entre l'empilement de cellules de batterie (120) et le châssis de barre omnibus (130) et un espace entre le châssis de barre omnibus (130) et la plaque d'extrémité (150).

9. Le module de batterie (100) selon la revendication 8, dans lequel:
l'élément de transfert de chaleur (500) remplit entièrement un espace entre l'empilement de cellules de batterie (120) et le châssis de barre omnibus (130) et un espace entre le châssis de barre omnibus (130) et la plaque d'extrémité (150).

10. Le module de batterie (100) selon la revendication 8, comprenant en outre :
un fil d'électrode (111, 112) qui est en saillie depuis l'empilement de cellules de batterie (120),
dans lequel l'élément de transfert de chaleur (500) est en contact avec le fil d'électrode (111, 112).

11. Le module de batterie (100) selon la revendication 8, comprenant :
une pluralité de barres omnibus (160) montées sur le châssis de barre omnibus (130),
dans lequel l'élément de transfert de chaleur (500) vient en contact avec la barre omnibus (160) et le châssis de barre omnibus (130).

12. Le module de batterie (100) selon la revendication 1, dans lequel:
l'élément de transfert de chaleur (500) vient en contact avec une partie inférieure du châssis de module (200) et une partie supérieure du châssis de module (200).

13. Bloc-batterie comprenant le module de batterie (100) tel que défini dans la revendication 1.
